# EUROPEAN PATENT APPLICATION

(11) **EP 4 020 795 A1**
(43) Date of publication of application: **29.06.2022**
(21) Application number: 21189333.4
(22) Date of filing: 03.08.2021
(51) Int. Cl.: H02S 20/00

(54) **A FLOATING SOLAR ARRAY**

(30) Priority: 06.08.2020 NL 2026230
(71) Applicant: Oval Economy B.V., 1018 LE Amsterdam (NL)
(72) Inventor: ZANEN, Eduard Willem, 1018 LE Amsterdam (NL); SCHERMER, Nicolaas Johannes, 1018 LE Amsterdam (NL); AUFENAST, Edmund David, 1018 LE Amsterdam (NL); JOGIA, Jayna, 1018 LE Amsterdam (NL)
(74) Representative: Cramwinckel, Michiel

(57) **Abstract**

The invention is directed to a floating solar array (1) comprising,
two or more parallel positioned buoyant flexible pipes (2) which are spaced apart by a number of framework structures (3), each pipe having an axis (11). The framework structure (3) comprises a support (48) for one or more photovoltaic panels (9) and at least three connections (10) between the framework structure (3) and the buoyant flexible pipe (2). One or more photovoltaic panels (9) are connected to the support (48) of framework structure (3). The connection (10) between the framework structure (3) and the buoyant flexible pipe (2) is such that it allows movement of the connection (10) in an axial direction along the buoyant flexible pipe (2) and allows a rotational movement of the connection (10) around the axis (11) of the buoyant flexible pipe (2).

## Description

The invention is directed to a floating solar array comprising parallel positioned buoyant flexible pipes and photovoltaic panels supported by the pipes.

The use of a floating solar array is advantageous over solar arrays on land because land is likely to be more expensive and because there may be fewer rules and regulations for structures built on bodies of water not used for recreation. Land can further be used for more applications than most bodies of water. Unlike most land-based solar plants, floating arrays can be unobtrusive because they are hidden from public view. Another benefit of a floating solar array is that the photovoltaic panels are kept at a cooler temperature than they would be on land, leading to a higher efficiency of solar energy conversion. The floating solar array also reduces the amount of water lost through evaporation and inhibits the growth of algae. Because of these advantages several floating solar arrays have been developed and built.

An example of such a floating solar array is described in US2017/0040926. A number of parallel flexible pipes make a closed loop at another periphery. The flexible pipes are interconnected by welded fittings with elbow connections at corner junctions and T-fittings at junctions of three pipes. Photovoltaic panels are supported by angled bars fixed above the floating flexible pipes. The angled bars are part of a triangle structure consisting of a horizontal bar which is connected to the pipes. Around the pipes a plurality of circular collars are secured at intervals. Short vertical spars extend from the collars to which the horizontal bars are fastened.

A disadvantage of the solar array of US2017/0040926 is that the array cannot be used in large open water where high waves may form. A problem with high waves is that load concentration in the array will occur resulting in failure of the connections of the pipes and/or failure of the support structure of the photovoltaic panels.

The object of the present invention is to provide a solar array which can withstand higher waves.

This object is achieved by the following solar array.

A floating solar array comprising,
two or more parallel positioned buoyant flexible pipes which are spaced apart by a number of framework structures, each pipe having an axis,
wherein the framework structure comprises a support for one or more photovoltaic panels and at least three connections between the framework structure and the buoyant flexible pipe,
wherein one or more a photovoltaic panels are is connected to the support of framework structure, and
wherein the connection between the framework structure and the buoyant flexible pipe is such that it allows movement of the connection in an axial direction along the buoyant flexible pipe and allows a rotational movement of the connection around the axis of the buoyant flexible pipe.

Applicants found that the solar array can be used in open water withstanding higher waves than the prior art array. It is believed that the special connection allowing the claimed movement between the framework and the buoyant flexible pipe results in that less load concentrations will occur in the array when the waves are higher. A further advantage is that the pipes are not required to be interconnected by means of welding with elbow connections at corner junctions and T-fittings at junctions of three pipes as in the prior art. In a preferred embodiment the pipes themselves are made in one piece thereby avoiding welding of the buoyant flexible pipes altogether. A further advantage is therefore that the array may be assembled in a simple, fast and efficient manner requiring less separate parts as will also be explained for the preferred embodiments. Further advantages will be mentioned when describing the preferred embodiments below.

The connection between the framework structure and the buoyant flexible pipe is such that it allows movement of the connection in an axial direction along the buoyant flexible pipe and allows a rotational movement of the connection around the axis of the buoyant flexible pipe. An array having such connections is able to support tension and compression applied by the pipes to the frame work structures in the direction perpendicular to the pipes. The connection may also allow movement of the framework structure upwards and sideways with respect to the buoyant flexible pipe. It is found that this additional movement may have some benefit. However it is preferred that the connection between the framework structure and the buoyant flexible pipe is such that it only allows movement of the connection in an axial direction along the buoyant flexible pipe and allows a rotational movement of the connection around the axis of the buoyant flexible pipe. This allows one to fix the connection on the buoyant flexible pipe such that it will not easily disconnect when the framework is lifted by waves with respect to the pipes.

The connection between the framework structure and the buoyant flexible pipe may be achieved in many manners as long as the described movements are allowed. The connection may be comprised of two legs pointing downwards from the framework structure at either side of the buoyant flexible pipe. Suitably these legs are parallel positioned and at their upper end connected by a horizontal part of the framework structure. The substantially rectangular space having an opening at its lower end is suitably provided with a bearing surface to allow the claimed movements. Such a bearing surface may be formed by a flexible material which allows the described movements. Such a flexible band may run from one leg to the other leg of the connection via the upper side of the buoyant flexible pipe. The flexible band will then rest on about the upper half of the pipe. This allows a rotational movement of the connection relative to the pipe along the axis of the pipe. Further the connection may move upwards and sideways relative to the pipe. The friction between band and pipe will determine if the connection can easily move along the length of the pipe. The band may be made of a plastic or rubber, suitably fibre reinforced rubber or plastic. The material is so chosen that is has a high fatigue resistance, good weather resistance and a low abrasive surface.

More preferred the connection comprises one or more concave bearing surface elements which fit around the buoyant flexible pipe such that it allows only movement of the connection in an axial direction along the buoyant flexible pipe and a rotational movement of the connection around the axis of the buoyant flexible pipe. The bearing surfaces suitably avoid that the connection and thus the framework structure can move upwards relative to the buoyant pipes and/or avoid that the connection and thus the framework structure can move side wards, i.e. horizontally, relative to the buoyant pipes.

The connection suitably comprises of at least one concave bearing surface element fitted concentrically around the buoyant flexible pipe. For example the connection may comprise three concave bearing surface elements for ease of attachment. For example a top concave bearing element may be connected to the framework structure in the horizontal upper part of the connection. This framework structure may be placed on top of the buoyant flexible pipes and the two remaining concave bearing structures may be fitted to the legs thereby enclosing the pipe in the connection. In case of a single concave bearing surface element the elements may be added to an end of a buoyant flexible pipe and moved to the desired position in the array.

Such elements are suitably made of a material which provides a good sliding bearing surface with the curved exterior of the buoyant flexible pipe. Preferably such elements are made of a material which provides a low friction interface with the buoyant pipe and preferably wears out faster that the buoyant pipe material.

The buoyant pipes may be made of any material which are flexible to a certain degree to accommodate with the waves. The pipes may be at least long enough to support one framework structure and preferably numerous framework structures. The maximum length is not limited in any manner. Lengths of 500 meters and even more may be envisaged. The diameter will determine the buoyancy and will be chosen such that the pipes are able to carry the load placed on to it, ie the frame work structures. The outer diameter may for example be between 0.3 and 2 m. Smaller diameters than 0.3 m to 0.1 m may be used for arrays which float on more dense media such as mud. The pipes may be made by connecting smaller parts having a smaller length to an assembled pipe having a longer length. Preferably the pipes are made in one part. Preferably the pipes are made from polypropylene and more preferably from polyethylene and even more preferably from high density polyethylene. The polypropylene and polyethylene pipes are preferably manufactured by extrusion. The extrusion is preferably performed at or near the location where the solar array is assembled. This allows manufacture of the pipe in one part, thereby avoiding having to connect the pipes or to have to transport the longer pipes over land. Such pipe connections are preferably avoided because it introduces a spot where the structure may fail in time during use. Extrusion of polypropylene or polyethylene pipes is a known process used to make for example pipes for transport of natural gas. In the extrusion process carbon black, suitably 3 to 5 wt.%, is preferably added to increase the UV resistance of the pipes. The thus manufactured pipes may be used to assembly the solar array at the location of extrusion. The pipes may also be transported over water to the position where the solar array is assembled. The end of the pipes are closed suitably by a single welded cap to achieve the buoyancy.

The framework structure may support one or more photovoltaic panels. The panels may be arranged as in US2017/0040926. In such an arrangement the panels are all angled to one side of the array. This will further be referred to a south configuration. The base of one panel may run parallel to the longitudinal beam and thus also parallel to the pipes or run parallel to the connecting beams. Support structures for the panels as described in this patent publication may be used to position the panels onto the framework structure.

Preferably the photovoltaic panels are positioned in a so-called east-west configuration on the framework. Such a configuration is advantageous because it avoids a power peak during a day, because such a configuration is more efficient in winter time at lower sun angles and because per square meter of the floating solar array such a configuration is more efficient. Further it allows the panels to be positioned using less framework structures for supporting the panels themselves, i.e. framework beams. In an east-west configuration two panels of a pair may support each other or be individually connected to the framework structure. The panels will be suitably be positioned under an angle defining a lower end of the panel and an upper end. The lower end is suitably fixed to a part of the framework and the upper end may be connected to the upper end of the other panel of the pair. Preferably the upper end of a panel is slidably connected to the framework. The slidable connection allows a movement of the panels in an angled plane defined between the lower end and the upper end of the panel relative to the framework structure. Such a movement is advantageous because it helps to isolate the panels from stresses in the framework structure arising from the continuous motion of the pipes on the waves.

The panels of in a south or east-west configuration are preferably positioned under an angle with the horizon. Angles panels are preferred because angles it reduces the risk that dirt accumulates on the panels and because birds tend to avoid the angled surfaces while allowing for sufficient light to hit the panels. The angle is suitably between 10 and 30 degrees and preferably between 17 and 20 degrees.

Preferably one framework structure supports two or more pairs of photovoltaic panels, preferably two or three pairs. The numbers of pairs will be determined by the dimensions of the panels and the maximum allowable dimensions of the framework for a certain expected wave height.

The framework structure comprises a support for one or more photovoltaic panels and at least three connections between the framework structure and the buoyant flexible pipe. In a first embodiment the number of connections may be four and suitably positioned at the four corners of a rectangular frame as part of the framework structure. The framework structure suitably comprises of two longitudinal beams, two connecting beams running from one longitudinal beam to the other longitudinal beam and four connections at the resulting four corners. Suitably the longitudinal beams are positioned perpendicular to the connecting beams. One longitudinal beam run parallel with a buoyant pipe and the other longitudinal beam of the framework structure runs run parallel with a neighbouring buoyant pipe of the array.

In this embodiment the lower end of one panel of a pair of panels may be connected to one of the longitudinal beams running in the direction and above one of the buoyant flexible pipes and the lower end of the other panel of the pair is connected to the longitudinal beam running in the direction and above the spaced apart and neighbouring buoyant flexible pipe. The two panels of one pair may be connected at their upper ends or slidably attached to the framework structure as described above.

The photovoltaic panels may be connected to the longitudinal beams by means of a clamp. The clamp suitably has an opening to connect to the beam and an opening to connect to the panel. The photovoltaic panels of a pair may further be connected at an elevated position by means of a clamp. This clamp suitably has two openings for each of the two panels of the pair of photovoltaic panels. The openings of these clamps are suitably provided with a snap fit connection when used to connect the panel to the beam and to connect the two panels at the elevated position. The snap fit connection is advantageous because it enables one to assemble the solar array without having to screw for or bolt parts together thereby significantly simplifying the process of assembly. The snap fit connection enables a connecting of the beam to the clamp and of the lower end of the photovoltaic panel to the same clamp resulting in a connection between panel and beam. The snap fit connection in the clamp enables a connection of the upper end of each of the panels to the same clamp resulting in a connection between the two panels at the elevated position. The snap fit connection may be achieved by using clamps made of a flexible material, such as for example HDPE, PU, uPVC or PVC.

The number of clamps per photovoltaic panel will depend on the size of the panel. For an average sized panel two or three clamps may be sufficient to connect the lower end of the panel to the beam and one or two clamps may be sufficient to connect the upper end s of a panel.

The clamp to connect the panel to the beam and the clamp to connect the two panels at the elevated position suitably have the same design. Such a clamp is provided with three openings, wherein two openings fit with a panel and one opening fits with a longitudinal beam. When such a clamp is used to connect the upper ends of the two panels the remaining opening may be advantageously used to position cables and the like. When clamps are used of the same design the angle at which the photovoltaic panels are positioned relative to the horizon may suitably be as described above.

The number of parallel pipes in one solar array may be minimally two. There is no theoretical maximum and will depend on the number of panels per array. The number of frameworks will depend on for example the length of the pipes, the number of pipes and the layout as described below. The floating solar array may have between 10 and 20000 photovoltaic panels and will depend on the available water surface. At very large solar array parks more than one floating solar array according to the invention may be positioned next to each other.

In a first possible layout the floating solar array comprises four or more parallel positioned buoyant flexible pipes and framework structures having four connections as described above. The framework structures are positioned in a checkerboard pattern of framework structures and open spaces. In this layout the array comprises open spaces which are covered with one or more free pairs of photovoltaic panels. One panel of such a free pair is connected to one of the longitudinal beams of a neighbouring framework structure and the other panel of the free pair is connected to the longitudinal beam of another and neighbouring framework structure. The two panels of the free pair are connected at an elevated position. This layout is advantageous because fewer frameworks are required while the solar array is provided with a multitude of photovoltaic panels thereby not having to leave open spaces.

The solar array having the above checkerboard layout is preferably provided with the framework structures supporting two or three pairs of photovoltaic panels and the covered open spaces are provided with two or three free pairs of photovoltaic panels.

In a next possible layout the floating solar array comprises three or more parallel positioned buoyant flexible pipes are present and at least two rows of framework structures having four connections as described above. The framework structures suitably leave no open spaces in the array. The framework structures have a start and an end along the flexible pipes. The start one framework structure along one buoyant flexible pipe in one row is suitably positioned between the start and the end of a framework structure in the neighbouring row at the same buoyant flexible pipe. This alternating layout is advantageous because every solar panel has a dedicated metal frame to which it is attached to. This removes any apposing movement opportunities on the panel thereby reducing stress on the solar panels and increasing the range of movement and thus the lifespan of the solar array. The solar array having the above alternating layout is preferably provided with the framework structures supporting two or three pairs of photovoltaic panels.

In a second embodiment the number of connections may be three and suitably positioned at the three corners of a triangular shaped frame as part of the framework structure. It has been found that the resulting array is more stable because it reduces the amount of torque exercised by the frame works on to the buoyant pipes. Further it provides for a more effective tessellation of the framework structures on to the system of to the to the parallel positioned buoyant flexible pipes. By a more effective tessellation is here meant that more photovoltaic panels per area of the array can be fitted as compared to when for example the frame work structure is provided with four connections.

The framework structure having three connections is suitably comprised of a substantially horizontal triangular frame connecting the three connections as present at the three corners of the triangular frame. The framework structure further comprises an inclined frame structure extending above the substantially horizontal triangular frame as the support for the one or more photovoltaic panels. The inclined frame structure may support one or more photovoltaic panels in a south configuration. Suitably the inclined frame structure supports at least two photovoltaic panels in a saddle arrangement as in an east-west configuration.

The floating solar array comprising framework structures having three connections is preferably a solar array as described here. In such an array two neighbouring first and second parallel positioned buoyant flexible pipes of the array are spaced apart by a first row of a number of first framework structures. The first framework structure is connected to the first buoyant flexible pipe with two connections and connected to the second buoyant flexible pipe with one connection. Suitably such an array further comprises a third buoyant flexible pipe spaced from the second buoyant flexible pipe by a second row of a number second framework structures wherein the second framework structure is connected to the second buoyant flexible pipe with two connections and connected to the third buoyant flexible pipe with one connection. Suitably along the second buoyant flexible pipe the two connections of the second framework structure alternate with the one connection of the first framework structure. To avoid that connections from one framework structure collide with a neighbouring connection along the same buoyant pipe it is preferred to position a bumper in between. Such a bumper may simply be a vehicle tyre. These tyres may be used tyres and can be slidably connected onto the pipe.

The floating solar array may have two or more parallel positioned buoyant flexible pipes having a pipe end at one side of the array and an opposite pipe end at an opposite side of the array. The pipe ends of the parallel positioned buoyant flexible pipes at each side of the array are each connected by two cables to an elongated buoyant bridle. Thus each pipe end at one side of the array is connected by two cables to the elongated bridle located at the same side of the array. The elongated buoyant bridle at each side of the array is spaced away from the pipe ends of the array. The elongated buoyant bridle may be a buoyant pipe, similar to the buoyant flexible pipes of the array.

The buoyant bridle will on average suitably be positioned substantially perpendicular with respect to the parallel positioned buoyant flexible pipes of the array. The elongated buoyant bridle may be a straight pipe or a curved pipe and may be made of the same material as the flexible buoyant pipes. The length of the buoyant bridle will be suitably such that it can effectively space apart all of the parallel positioned buoyant flexible pipes of the array. The cables may be tensioned or nontensioned.

The elongated buoyant bridle provides a convenient place for attaching anchoring and it allows for an easy scale up. For example when oversized elongated buoyant bridles are used it is easy to add more parallel pipes while not having to change the anchoring. Applicants found that the elongated buoyant bridle can space apart the parallel buoyant flexible pipes and thereby reducing the forces exercised by the pipes to the framework structures connecting the neighbouring pipes. Applicants further found that such structures do not necessarily have to be present in order to obtain a stable array of two or more parallel positioned flexible pipes.

The invention is for this reason also directed to a floating array of two or more parallel positioned buoyant flexible pipes having a pipe end at one side of the array and an opposite pipe end at an opposite side of the array and wherein the pipe ends of the parallel positioned buoyant flexible pipes at each side of the array are each connected by two cables to an elongated buoyant bridle. The further details are as the floating solar array as described above.

In use the floating solar array will be anchored to the sea bed or lake or river bed. The two ends of individual pipes may each be connected to an anchor. For example alternating pipes may be connected in this manner to an anchor. When the floating solar array or the floating array is provided with an elongated buoyant bridle it is preferred that both of the ends of each of the elongated buoyant bridles of the floating solar array is provided with an anchor. Examples of suitable anchors may be stud poles, concrete blocks on the sea bed. Examples of suitably anchoring systems for floating solar arrays are those provided by Seaflex AB from Sweden. Anchors may also connect the array or its elongated buoyant bridles to the shore, a dam or other man-made structures. For example the array may be fixed by anchors to a hydroelectric dam. Preferably some sort of shock absorbing is applied in the anchoring. The strain in the anchor lines is suitably greater than the strain in the cables connecting the pipe ends with the elongated buoyant bridle under the same load. This is to maintain the shape of the array. When the solar array is positioned on streaming water as in a river or in tidal waters the orientation of the pipes is preferably the same as the direction of the moving body of water.

The photovoltaic panels may be standard commercially available panels which are toughened and have some sort of improved ingress protection. Examples of such commercially available panels are those of the JSM60 or the JSP60 type obtainable from Jonsol GmbH, the AFM60-305 or the AFP60-270 type obtainable from Altius Solar, the PM096BW0 type obtainable from SunForte or the SR-M660310 type obtainable from SunRise Solartech co., Ltd from China.

The photovoltaic panels may also be photovoltaic thermal hybrid solar collectors also known as PV/T systems or PVT collectors. In such a system a working fluid flows through the panel thereby cooling the panel and increasing its efficiency to convert solar rays into electricity. The heated working fluid may be used in other processes, such as desalination and heat recovery.

Preferably the panels have a frame with a thickness of between 0.3 and 0.4 m. This allows the panels to be connected to the framework using the above described clamps in a simple manner.

The photovoltaic panels will be connected to the power grid or to a process using the electrical energy such as a process to prepare hydrogen by electrolysis. The electrical power may, in part, be stored in batteries or other power storage means. The connecting of the panels may for example be as described in US2017/0040926.

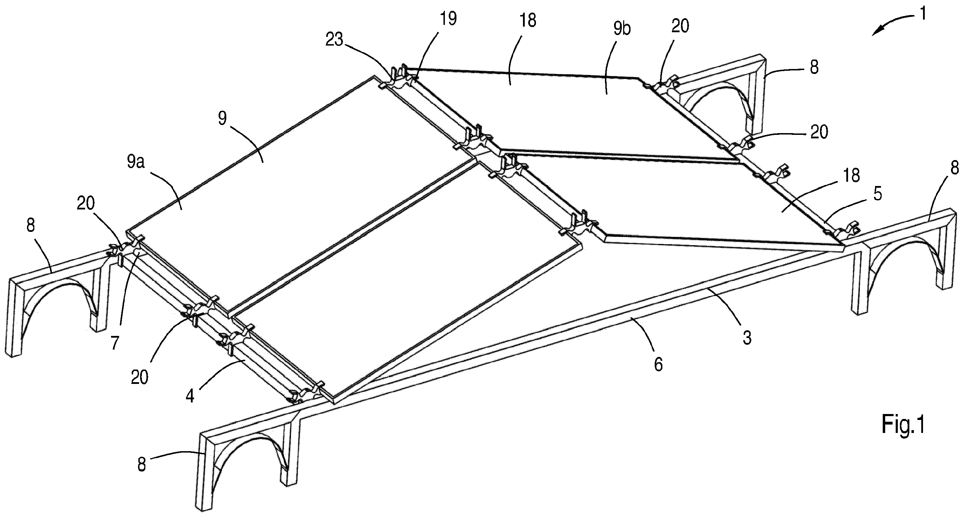

The invention shall be illustrated using Figures 1-16.

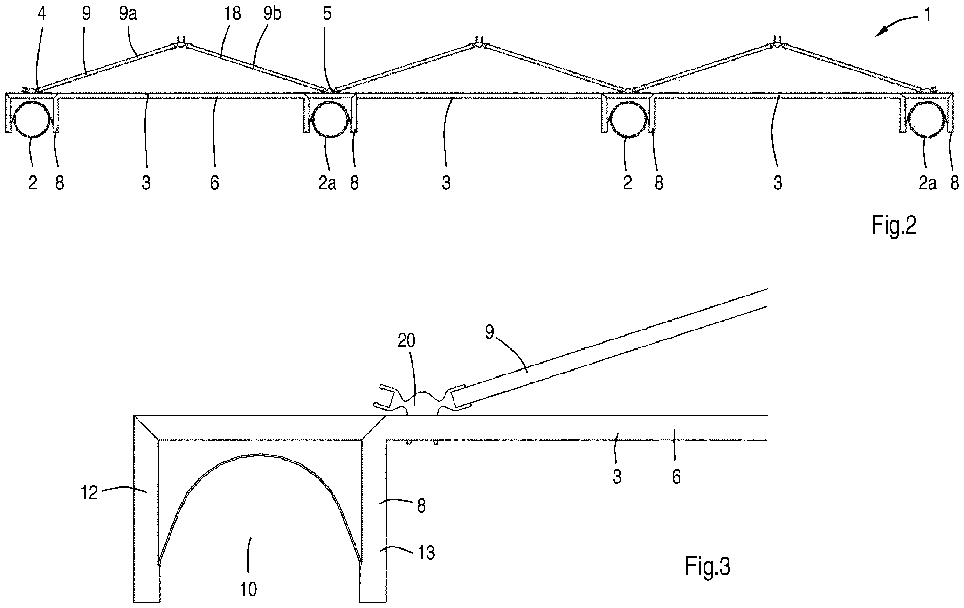

Figure 1 shows a framework structure (3) having two longitudinal beams (4,5) running in the direction of the buoyant flexible pipes (2) as shown in Figures 2 and 3 and two connecting beams (6,7) running from one longitudinal beam (4) to the other longitudinal beam (5). Beams (4,5) support photovoltaic panels (9). Four connections (10) are present at the corners of the rectangular structure of longitudinal beams (4,5) and connecting beams (6,7). The framework structure (3) supports two pairs (18) of photovoltaic panels (9a,9b), wherein one panel (9a) of a pair (18) is connected by means of two clamps (20) to a supporting longitudinal beam (4) and the other panel (9b) of the pair (18) is connected by means of two clamps (20) to the supporting longitudinal beam (5). The two panels (9a,9b) of one pair (18) are connected at an elevated position (19) by means of two clamps (23).

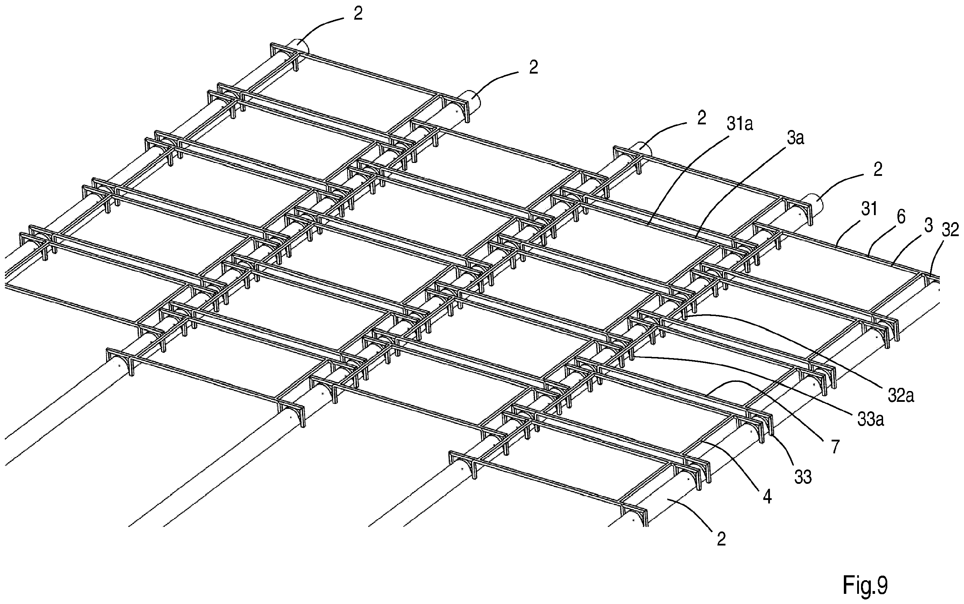

Figure 2 shows a side view in the direction of the pipes (2) of floating solar array (1) according to this invention having a checkerboard layout as further illustrated in Figure 9. Four parallel and spaced apart buoyant flexible pipes (2) are spaced apart by the framework structures (3) in this layout. The connections (10) position and connect the frameworks (3) on top of the four buoyant flexible pipes (2). Because of these framework structures (3) the pipes (2) will be spaced apart and be oriented parallel with respect to each other. Photovoltaic panels (9) are supported by the beams (4,5) of framework structures (3). One panel (9a) of the pair (18) is connected to one of the longitudinal beams (4) as positioned above a buoyant flexible pipe (2). The other panel (9b) of the pair (18) is connected to the longitudinal beam (5) running in the direction and above the spaced apart and neighbouring buoyant flexible pipe (2a).

Figure 3 shows a side-view detail of the framework structure (3) of Figures 1-2 as seen in the direction of the longitudinal beam (4). The lower end of a photovoltaic panel (9) is shown connected to beam (4) by means of clamp (20). Further a section of connecting beam (6) is shown. The connection (10) has two legs (12) pointing downwards at either side of the buoyant flexible pipe (2) (not shown).

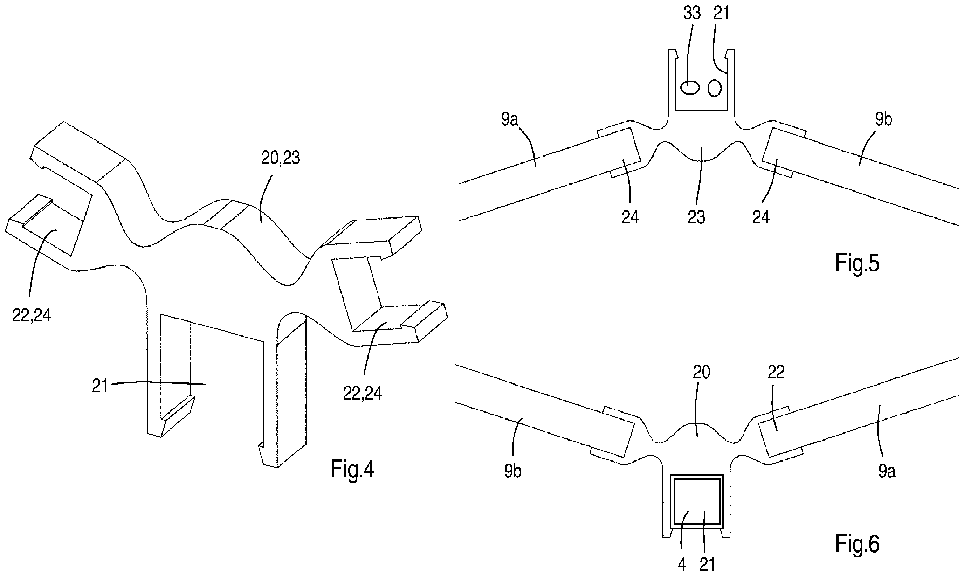

Figure 4 shows a clamp (20,23) which can be used for connecting the photovoltaic panels (9a,9b) to the longitudinal beams (4,5) and which can be used to connect two photovoltaic panels (9a,9b) of a pair (18) at an elevated position (19). The clamp (20,23) is provided with an opening (21) to connect to the beam (4,5) with a snap fit connection. The clamp is also provided with openings (22,24) to connect to the lower end of a photovoltaic panel (9) or to an upper end of a photovoltaic panel (9) depending its use.

Figure 5 shows the clamp (23) of Figure 4 used to connect the upper ends of two photovoltaic panels (9a,9b) of a pair (18) at an elevated position (19) by means of a snap fit connection. The opening (21) is used to direct electrical cables (33). This is advantageous because in this way the cables (33) are elevated above the sea or lake level and are thus less prone to be damaged.

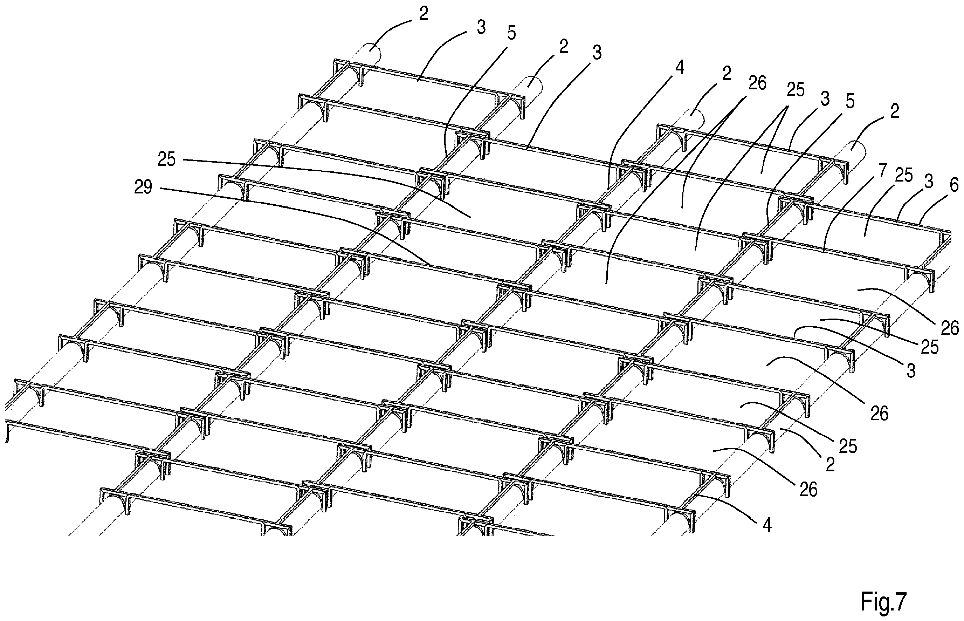

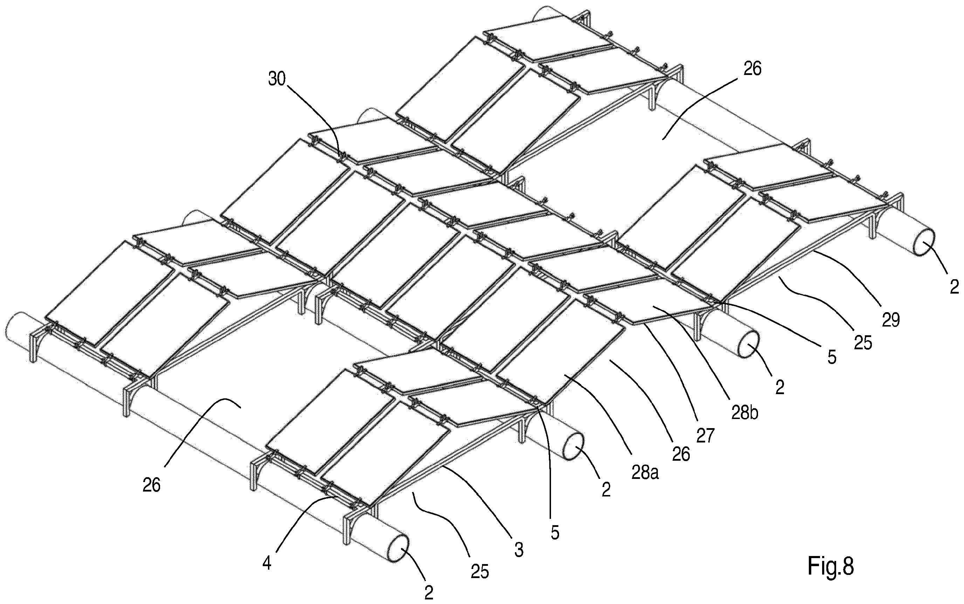

Figure 6 shows the clamp (20) of Figure 4 wherein opening (21) is used to connect with longitudinal beam (4) by means of a snap fit connection and openings (22) are used to connect to the lower ends of two photovoltaic panels (9a,9b) of different pairs of panels (9) by means of a snap fit connection. Such a dual use shown in this Figure is applied in a so-called checkerboard layout as further shown in Figures 7 and 8. The clamp (20) should in use have some flexibility allowing that the two panels connected to one clamp (20) can rotate with respect to each other for between plus 5 and minus 5 degrees over an axis parallel to the pipes (2).

In Figure 7 shows a floating solar array (1) wherein the photovoltaic panels (9) are not shown for clarity reasons. The solar array has five parallel positioned buoyant flexible pipes (2). The framework structures (3) are positioned in a checkerboard pattern (25) of framework structures (3) and open spaces (26). The open spaces (26) may be covered with one or more free pairs (27) of photovoltaic panels (28a,28b) as is illustrated in Figure 8.

Figure 8 shows a floating solar array (1) having four parallel positioned buoyant flexible pipes (2). The framework structures (3) are positioned in a checkerboard pattern (25) of framework structures (3) and open spaces (26). The framework structures (3,29) are all covered with two pairs (18) of photovoltaic panels (9a,9b). The open spaces (26) in the centre row are each covered with two free pairs (27) of photovoltaic panels (28a,28b). The open spaces (26) in the two outer rows are open because no longitudinal beam is present running along the outer two pipes (2) in this layout. Obviously such a beam may be added to also allow coverage of these open spaces (26). In such a layout a panel (28a) of the free pair (27) is connected to one of the longitudinal beams (5) of a neighbouring framework structure (3) and the other panel (28b) of the free pair (27) is connected to the longitudinal beam (4) of another neighbouring framework structure (29). The two panels (28a,28b) of the free pair (27) are connected at an elevated position (30) just as the pairs of panels (18) which cover the framework structures (3) in this layout.

Figure 9 shows a floating solar array (1) wherein the photovoltaic panels (9) are not shown for clarity reasons. The solar array has five parallel positioned buoyant flexible pipes (2) carrying four rows (31,31a) of framework structures (3). The framework structures (3) in one row (31) are positioned relative to framework structures (3a) in adjacent row (31a) as follows: the framework structures (3,3a) have a start (32,32a) and an end (33,33a) along the flexible pipes (2). The start (32) one framework structure (3) along one buoyant flexible pipe (2) in one row (31) is positioned between the start (32a) and the end (33a) of a framework structure (3a) in the neighbouring row (31a) at the same buoyant flexible pipe (2). In this layout all pairs of photovoltaic panels will be supported by a frame (3) as shown in Figure 1. Thus clamps (20) will thereby only connect one panel (9) with a longitudinal beam (4,5) and have one not used opening (22).

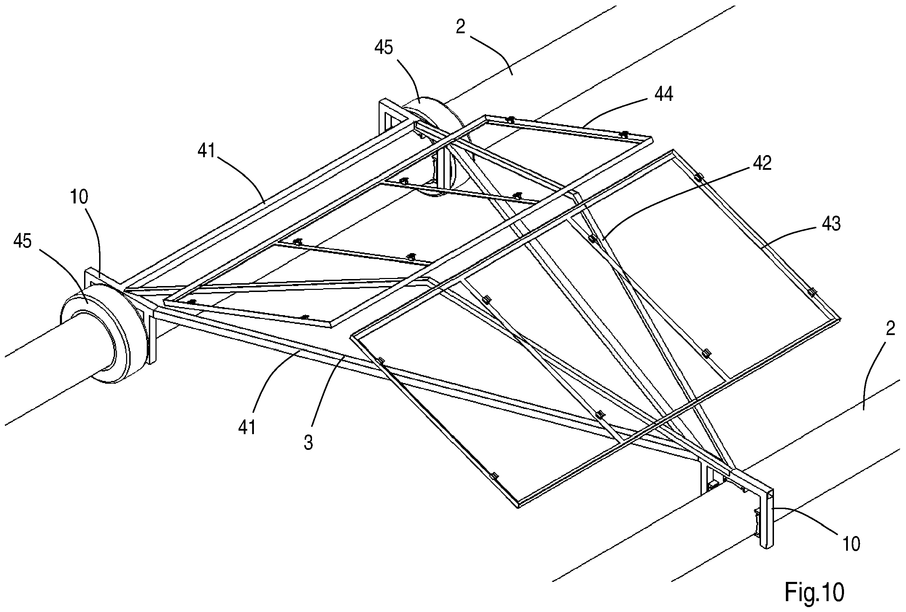

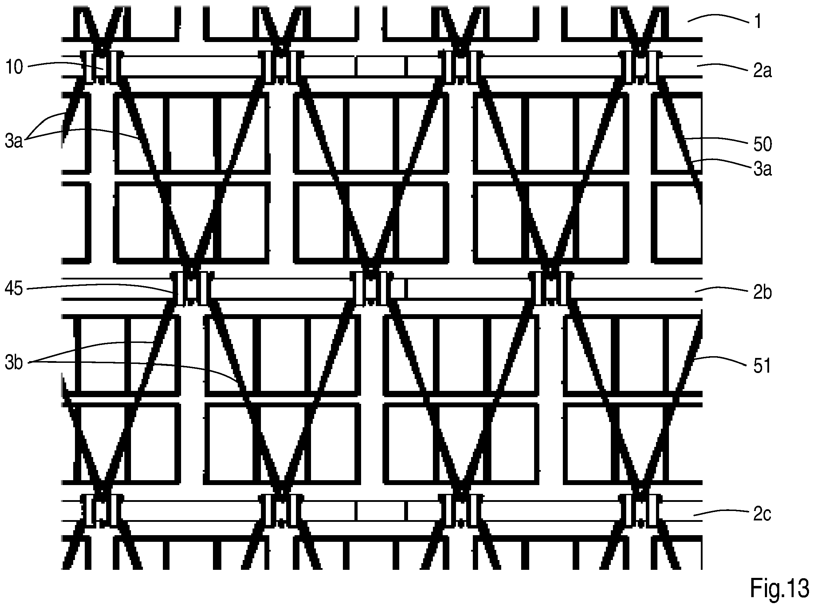

Figure 10 shows a framework structure (3a) comprises three connections (10) between the framework structure (3a) and the buoyant flexible pipe (2). The framework structure (3a) has a substantially horizontal triangular frame (41). The three connections (10) are present at the three corners of the triangular frame (41). The framework structure (3a) further has an inclined frame structure (42) extending above the substantially horizontal triangular frame (41). The inclined frame structure (42) supports two frames (43,44). The two frames (43,44) can each fit three photovoltaic panels (9) (not shown for clarity reasons) in a saddle arrangement. A bumper (45) is shown as present on the buoyant flexible pipe (2). This bumber (45) avoids that connection (10) of one frame work structure (3) collides with a next connection (10) of another framework structure connected to the same pipe (2) as shown in Figure 13.

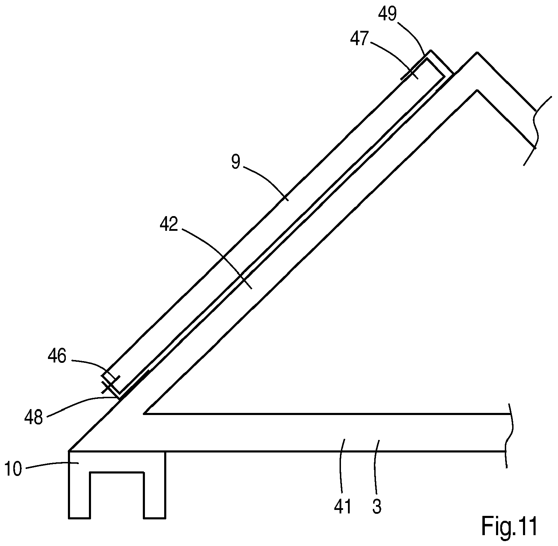

Figure 11 shows how a the lower end (46) of a photovoltaic panel (9) is fixed to the inclined frame structure (42) by support (48). The upper end (47) of the photovoltaic panel (9) is slidably connected to the framework by means of a cover (49) which allows a movement of the panels in an angled plane defined between the lower end (46) and the upper end (47) of the panel relative to the framework structure (3) and thus also relative to the inclined frame structure (42). The cover (49) as shown avoids that the photovoltaic panel (9) can flip outwards and detach from the framework structure (3).

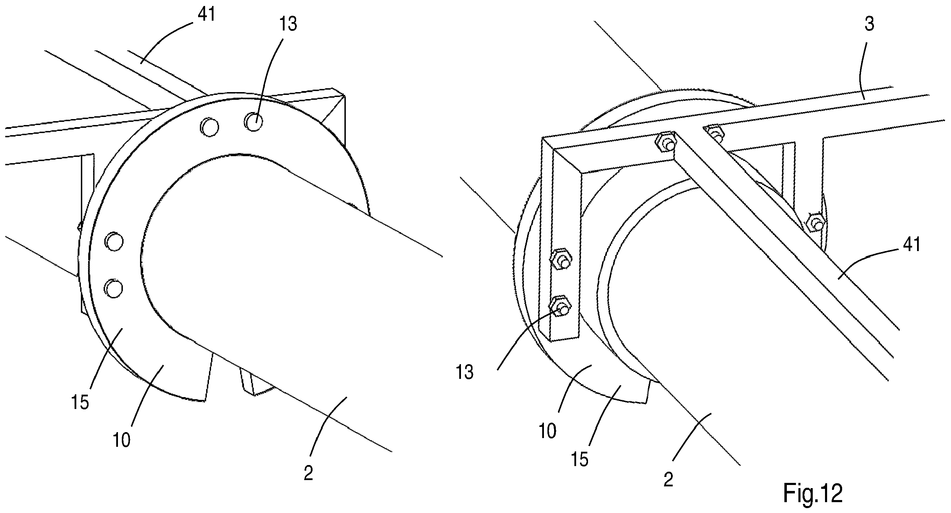

Figure 12 shows a connection (10) consisting of two legs (12) which extend downwards from the substantially horizontal triangular frame (41) as seen from different directions. To the substantially horizontal triangular frame (41) and the legs (12) a single concave bearing element (15) is connected by bolts (13). The single concave bearing elements (15) are positioned around the pipe (2) by inserting one end of pipe (2) into the concave bearing elements (15) and moving the concave bearing elements (15) to its desired position in the array (1).

Figure 13 shows part of a floating solar array (1) according to the invention from below. Two neighbouring first and second parallel positioned buoyant flexible pipes (2a,2b) of the array (1) are spaced apart by a first row (50) of a number of first framework structures (3a) wherein the first framework structure (3a) is connected to the first buoyant flexible pipe (2a) with two connections (10) and connected to the second buoyant flexible pipe (2b) with one connection (10). The array (1) further comprises a third buoyant flexible pipe (2c) spaced from the second buoyant flexible pipe (2b) by a second row (51) of a number second framework structures (3b) wherein the second framework structure (3b) is connected to the second buoyant flexible pipe (2b) with two connections (10) and connected to the third buoyant flexible pipe (2c) with one connection (10). As can be seen along the second buoyant flexible pipe (2b) the two connections (10) of the second framework structure (3b) alternate with the one connection (10) of the first framework structure (3a). Between the connections of different framework structures (3a) and (3a) along pipe (2b) bumbers (45) are present to avoid that these connections collide.

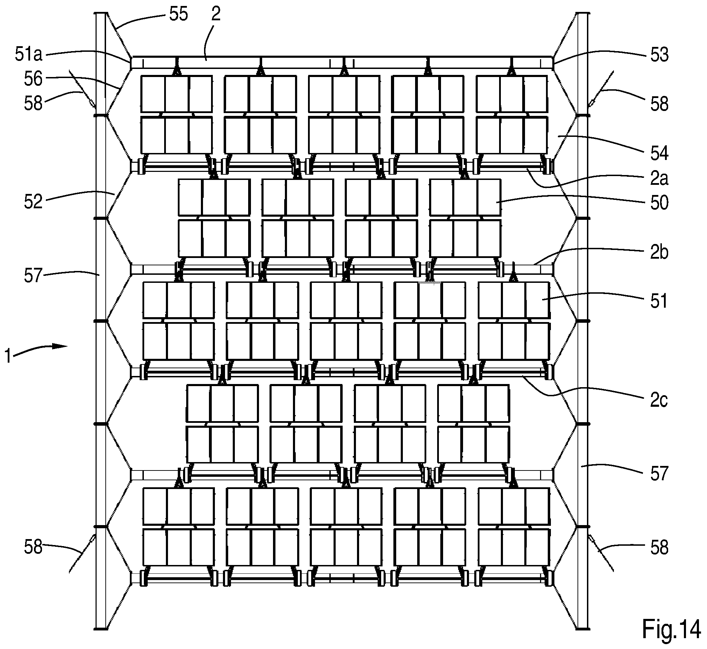

Figure 14 shows a floating solar array (1) according to the invention which includes the parts shown in Figure 13. In Figure 14 the array is shown from above. It can easily be envisaged how the rows the pipes and framework structures repeat in a previous and next rows. The six parallel positioned buoyant flexible pipes (2) have a pipe end (51a) at one side (52) of the array (1) and an opposite pipe end (53) at an opposite side (54) of the array (1). The pipe ends (51,53) of the six parallel positioned buoyant flexible pipes (2) are each connected by two cables (55,56) to an elongated buoyant bridle (57). The cables (55,56) connected to a pipe end of the same pipe are connected to the bridle (57) such that movement in the direction of the buoyant bridle (57) is avoided. This results in that also movement of the pipes (2) towards each other is avoided. The elongated buoyant bridle (57) at each side (52,54) of the array (1) is spaced away from the pipe ends (51,53) of the array (1) and positioned substantially perpendicular with respect to the parallel positioned buoyant flexible pipes (2). At the end of the two elongated buoyant bridles (57) anchors (58) are present.

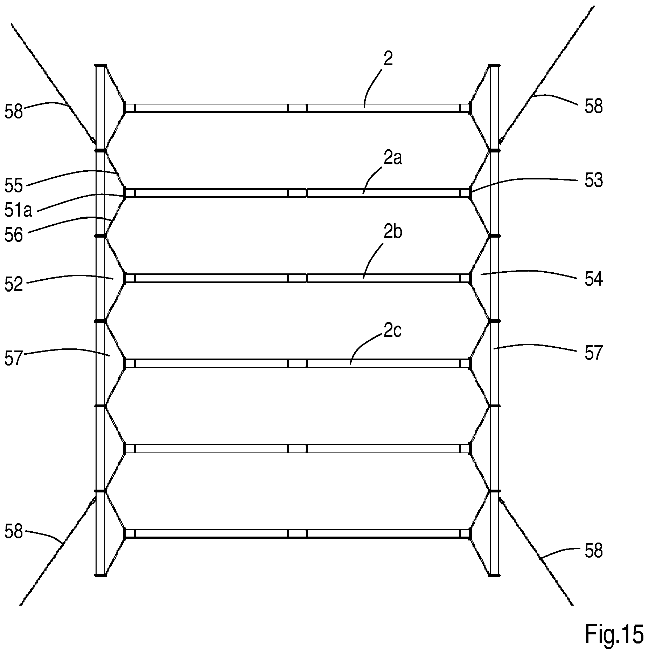

Figure 15 shows a floating array (60) of six parallel positioned buoyant flexible pipes (2) having a pipe end (51) at one side (52) of the array (60) and an opposite pipe end (53) at an opposite side of the array (60) and wherein the pipe ends of the parallel positioned buoyant flexible pipes (2) at each side of the array are each connected by two cables (55, 56) to an elongated buoyant bridle (57). The elongated buoyant bridle (57) at each side of the array (60) is spaced away from the pipe ends of the array and substantially perpendicular with respect to the parallel positioned buoyant flexible pipes (2). Such an array may be used as part of a fish farm where sub surface fish breeding containers are connected to the array (60). The array may also be used as a support of multiple desalination units to prepare potable water or multiple electrolysis units to make hydrogen. Suitably such an array is used in combination with the solar array of this invention making use of the electricity generated.

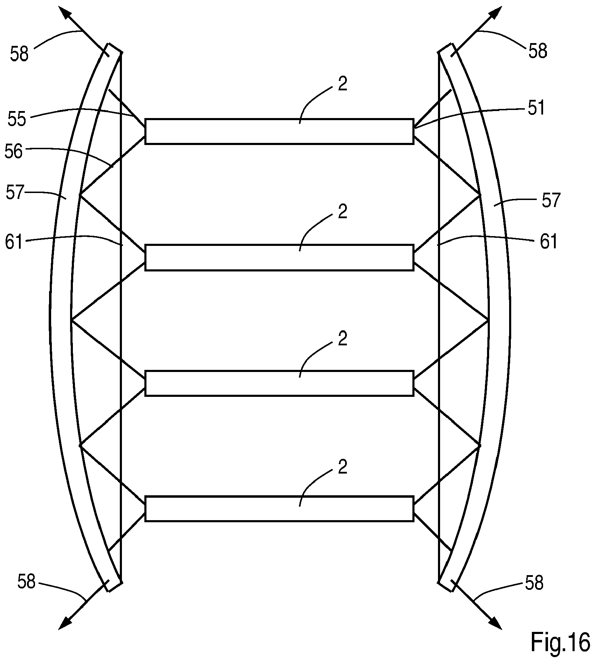

Figure 16 shows an alternative for the straight elongated buoyant bridle (57) of Figures 14 and 15. Here the bridle is curved by connecting a tensioned cable (61) between the end s of the bridle (57) as shown where the concave side of the curved bridle faces the pipe ends to which the bridle pipe is connected. The advantage of this curved elongated buoyant bridle pipe is that It increases the rigidity of the bridle pipe. This in turn allow for the geometry of the array to be maintained against forces from the wind and water. i.e. it keeps the parallel pipes in the same position.

## Claims

1. A floating solar array (1) comprising,
two or more parallel positioned buoyant flexible pipes (2) which are spaced apart by a number of framework structures (3), each pipe having an axis (11), wherein the framework structure (3) comprises a support (4,5,48) for one or more photovoltaic panels (9) and at least three connections (10) between the framework structure (3) and the buoyant flexible pipe (2),
wherein one or more photovoltaic panels (9) are connected to the support (4,5,48) of framework structure (3), and
wherein the connection (10) between the framework structure (3) and the buoyant flexible pipe (2) is such that it allows movement of the connection (10) in an axial direction along the buoyant flexible pipe (2) and allows a rotational movement of the connection (10) around the axis (11) of the buoyant flexible pipe (2).

2. A floating solar array according to claim 1, wherein the connection (10) comprises one or more concave bearing surface elements which fit around the buoyant flexible pipe (2) such that it allows only movement of the connection (10) in an axial direction along the buoyant flexible pipe (2) and a rotational movement of the connection (10) around the axis (11) of the buoyant flexible pipe (2).

3. A floating solar array according to claim 4, wherein the connection comprises at least one concave bearing surface element (15) fitted around the buoyant flexible pipe (2).

4. A floating solar array according to any one of claims 1-3, wherein the material of the one or more concave bearing surface elements (15) in use wears out faster that the material of which the buoyant pipe (2) is made of.

5. A floating solar array according to any one of claims 1-4, wherein the buoyant flexible pipe (2) is made of high density polyethylene or polypropylene.

6. A floating solar array according to any one of claims 1-5, wherein the framework structure (3) comprises three connections (10) between the framework structure (3) and the buoyant flexible pipe (2),

7. A floating array according to claim 6, wherein the framework structure (3) comprises of a substantially horizontal triangular frame (41) connecting the three connections (10) as present at the three corners of the triangular frame (41) and an inclined frame structure (42) extending above the substantially horizontal triangular frame (41) as the support (48) for the one or more photovoltaic panels (9).

8. A floating array according to claim 7, wherein the inclined frame structure (42) supports at least two photovoltaic panels (9) in a saddle arrangement.

9. A floating solar array according to any one of claims 6-8, wherein two neighbouring first and second parallel positioned buoyant flexible pipes (2a,2b) of the array (1) are spaced apart by a first row (50) of a number of first framework structures (3a) wherein the first framework structure (3a) is connected to the first buoyant flexible pipe (2a) with two connections (10) and connected to the second buoyant flexible pipe (2b) with one connection (10).

10. A floating solar array according to claim 9, wherein the array (1) further comprises a third buoyant flexible pipe (2c) spaced from the second buoyant flexible pipe (2b) by a second row (51) of a number second framework structures (3b) wherein the second framework structure (3b) is connected to the second buoyant flexible pipe (2b) with two connections (10) and connected to the third buoyant flexible pipe (2c) with one connection (10).

11. A floating solar array according to claim 10, wherein along the second buoyant flexible pipe (2b) the two connections (10) of the second framework structure (3b) alternate with the one connection (10) of the first framework structure (3a).

12. A floating solar array according to any one of claims 1-11, wherein the two or more parallel positioned buoyant flexible pipes (2) have a pipe end (51a) at one side (52) of the array (1) and an opposite pipe end (53) at an opposite side (54) of the array (1) and wherein the pipe ends (51a,53) of the parallel positioned buoyant flexible pipes (2) at each side (52,54) of the array (1) are each connected by two cables (55,56) to an elongated buoyant bridle (57) and wherein the elongated buoyant bridle (57) at each side (52,54) of the array (1) is spaced away from the pipe ends (51a,53) of the array (1).

13. A floating solar array according to claim 12, wherein the two elongated buoyant bridles (57) at each side (52,54) of the array (1) are provided with anchoring means (58).

14. A floating array (60) of two or more parallel positioned buoyant flexible pipes (2) having a pipe end (51a) at one side (52) of the array (1) and an opposite pipe end (53) at an opposite side (54) of the array (60) and wherein the pipe ends (51a,53) of the parallel positioned buoyant flexible pipes (2) at each side (52,54) of the array (60) are each connected by two cables (55,56) to an elongated buoyant bridle (57) and
wherein the elongated buoyant bridle (57) at each side (52,54) of the array (60) is spaced away from the pipe ends (51a,53) of the array (60).

15. A floating array according to claim 14, wherein the two elongated buoyant bridles (57) at each side (52,54) of the array (60) are provided with anchoring means (58).

16. A floating array according to any one of claims 14-15, wherein the bridle (57) is curved by connecting a tensioned cable (61) between the ends of the bridle (57) and wherein the concave side of the curved bridle (57) faces the pipe ends (51a,53) to which the bridle (57) is connected.
